# EUROPÄISCHE PATENTSCHRIFT

(11) **EP 1 064 186 B1**
(45) Veröffentlichungstag und Bekanntmachung des Hinweises auf die Patenterteilung: **06.10.2004**
(21) Anmeldenummer: 00903537.9
(22) Anmeldetag: 14.01.2000
(51) Int. Cl.: B62B 5/06, B62B 3/14

(54) **HANDGRIFF FÜR EINEN TRANSPORTWAGEN**
HANDLE FOR A TRANSPORT CART
POIGNEE POUR CHARIOT TRANSPORTEUR

(30) Priorität: 21.01.1999 DE 29901002 U
(43) Veröffentlichungstag der Anmeldung: 03.01.2001
(73) Patentinhaber: WANZL METALLWARENFABRIK GMBH, D-89336 Leipheim (DE)
(72) Erfinder: SCHMID, Johann, D-87757 Derndorf (DE); BOXLER, Anton, D-87772 Pfaffenhausen (DE)
(86) Internationale Anmeldenummer: PCT/DE2000/000154
(87) Internationale Veröffentlichungsnummer: WO 2000/043250

(56) Entgegenhaltungen:
- EP-A- 0 716 973
- DE-U- 8 423 585
- DE-U- 8 912 519
- DE-U- 29 508 411

## Beschreibung

Die Erfindung betrifft einen Handgriff für einen Transportwagen, mit einem Griffabschnitt und mit einem Basisabschnitt, an dem zwei nach unten gerichtete Vorsprünge angeordnet sind, die zum Einfügen in zwei nach oben gerichtete Rohre bestimmt sind, die sich am Transportwagen befinden.

Handgriffe dieser Art, wie zum Beispiel von deutschen Gebrauchsmuster G8912519.3 gezeigt, werden paarweise bei Transportwagen verwendet, die an ihrer Rückseite je zwei nach oben gerichtete, oben offene Rohre aufweisen, in welche die beiden Handgriffe eingesetzt werden. Mit Hilfe der beiden Handgriffe läßt sich der Transportwagen schieben und ziehen.

Es besteht Anlass, derartige Transportwagen mit einer Bremse auszustatten, um die Transportwagen auf Gefällstrecken sicher bewegen oder auch arretieren zu können. Dabei soll wenigstens einer der beiden Handgriffe so gestaltet sein, dass die Verbindungsmittel zwischen der Bremse und einem von Hand bedienbaren, am Handgriff befindlichen Bremsauslöser in nicht störender Weise am Handgriff geführt werden können.

Als Lösung dieser Aufgabe wird vorgeschlagen, in einem der beiden Vorsprünge des Handgriffes einen von unten nach oben gerichteten, aus dem Handgriff herausführenden Durchbruch vorzusehen.

In diesem Durchbruch kann nun ein Verbindungsmittel, sei es ein Seilzug oder ein Bremsgestänge, in vorteilhafter und nicht störender Weise untergebracht bzw. hindurchgeführt werden.

Durch das deutsche Gebrauchsmuster G 84 23 585.3 ist ein ähnlicher Transportwagen bekannt, der mit einer Bremseinrichtung ausgestattet ist. Dieser Transportwagen weist jedoch keine Handgriffe in dem hier vorliegenden Sinne auf.

Die Erfindung wird anhand eines Ausführungsbeispieles näher erläutert. Es zeigt
Fig. 1 in Seitenansicht einen Transportwagen sowie
Fig. 2 einen Handgriff.

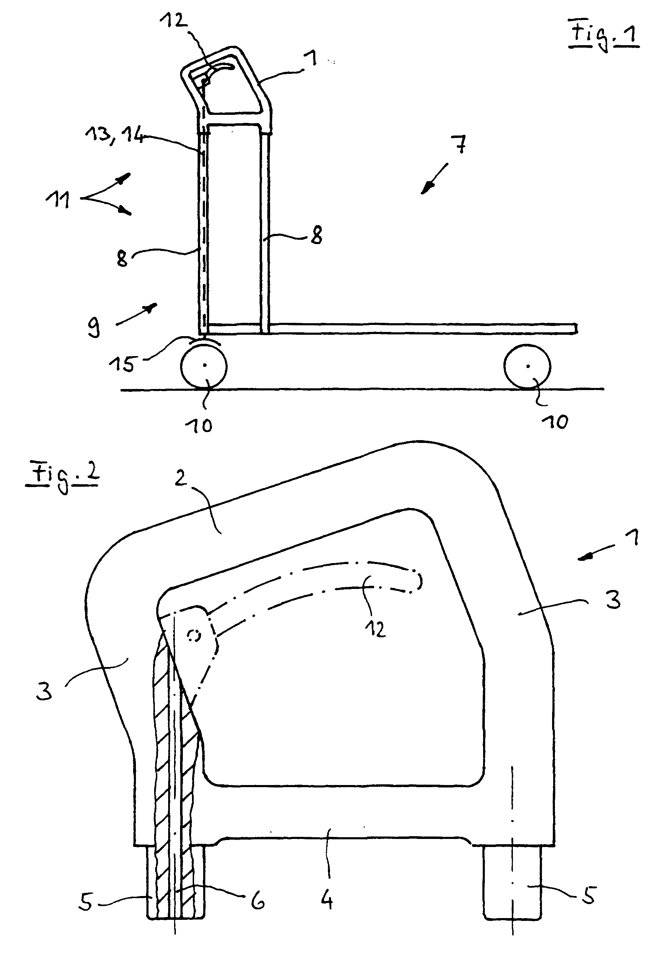

Fig. 1 zeigt einen Transportwagen 7, an dessen Rückseite zu beiden Längsseiten je zwei Rohre 8 nach oben gerichtet sind. Die Rohre 8 sind oben offen, so dass auf jedes Rohrpaar 9 ein Handgriff 1 aufsetzbar ist. An wenigstens einem der beiden Handgriffe 1 ist eine Bremseinrichtung 11 vorgesehen, damit wenigstens eine der beiden hinteren Fahrrollen 10 gebremst und/oder arretiert werden kann. Die Bremseinrichtung 11 weist am Handgriff 1 einen von Hand betätigbaren Bremsauslöser 12 auf, von dem im Handgriff 1 Verbindungsmittel 13 nach unten zu der auf die Fahrrolle 10 einwirkenden Bremse 15 führen. Die Verbindungsmittel 13 sind üblicherweise ein Seilzug 14 oder ein Gestänge 14.

Fig. 2 zeigt einen der beiden Handgriffe 1 ebenfalls in Seitenansicht. Der verschiedenartig gestaltbare Handgriff 1 weist einen Griffabschnitt 2 auf, von dem zwei Verbindungsabschnitte 3 nach unten zu einem Basisabschnitt 4 führen. Am Basisabschnitt 4 sind zwei nach unten gerichtete Vorsprünge 5 vorgesehen, die zum Einsetzen oder Einstecken in die nach oben offenen Rohre 8 des Transportwagens 7 bestimmt sind. In einem der beiden Vorsprünge 8 ist ein nach oben gerichteter Durchbruch 6 vorgesehen, der im Bereich des sich unmittelbar anschließenden Verbindungsabschnittes 3 aus dem Handgriff 1 herausgeführt ist, so dass von oben her ein Seilzug 14 oder ein Gestänge 14 durch den Durchbruch 6 hindurch und weiter durch das Rohr 8 nach unten geführt werden kann. Auf eine nähere Beschreibung des Bremsauslösers 12 und der Bremse 15 wird verzichtet, da verschiedene bekannte Lösungen und Ausgestaltungen im hier vorliegenden Falle möglich sind. Im Beispiel verläuft die Längserstreckung des Durchbruches 6 gerade. Dessen Längserstreckung kann aber auch, insbesondere bei der Verwendung eines Seilzuges 14, gekrümmt sein.

## Patentansprüche

1. Handgriff (1) für einen Transportwagen (7), mit einem Griffabschnitt (2) und mit einem Basisabschnitt (4), an dem zwei nach unten gerichtete Vorsprünge (5) angeordnet sind, die zum Einfügen in zwei nach oben gerichtete Rohre (8) bestimmt sind, die sich am Transportwagen (7) befinden, **dadurch gekennzeichnet, dass** in einem der beiden Vorsprünge (5) ein von unten nach oben gerichteter, aus dem Handgriff (1) herausführender Durchbruch (6) vorgesehen ist.

2. Handgriff nach Anspruch 1, **dadurch gekennzeichnet, dass** der Durchbruch (6) in einem zwischen dem Griffabschnitt (2) und dem Basisabschnitt (4) angeordneten Verbindungsabschnitt (3) aus dem Handgriff (1) herausführt.

3. Handgriff nach Anspruch 1 oder 2, **dadurch gekennzeichnet, dass** die Längserstreckung des Durchbruches (6) gerade oder gekrümmt ist.

## Claims

1. A handle (1) for a transport trolley (7), comprising a grip portion (2) and comprising a base portion (4) on which two downwardly directed projections (5) are disposed, which projections are intended for insertion into two upwardly directed tubes (8) which are located on the transport trolley (7), **characterised in that** a through-hole (6) directed upwardly from the bottom and leading out of the handle (1) is provided in one of the two projections (5).

2. A handle according to Claim 1, **characterised in that** the through-hole (6) leads out of the handle (1) in a connecting portion (3) disposed between the grip portion (2) and the base portion (4).

3. A handle according to Claim 1 or 2, **characterised in that** the longitudinal extent of the through-hole (6) is straight or curved.

## Revendications

1. Poignée (1) pour un chariot de transport (7), comprenant un segment de préhension (2) et un segment de base (4) sur lequel sont disposées deux saillies (5) pointant vers le bas qui sont destinées à être introduites dans deux tubes (8) pointant vers le haut situés sur le chariot de transport (7), **caractérisée en ce que** dans l'une des deux saillies (5) est prévu un passage (6) débouchant de la poignée (1), qui est orienté de bas en haut.

2. Poignée selon la revendication 1, **caractérisée en ce que** le passage (6) débouche de la poignée (1) au niveau d'un segment de liaison (3) placé entre le segment de préhension (2) et le segment de base (4).

3. Poignée selon la revendication 1 ou 2, **caractérisée en ce que** l'étendue longitudinale du passage (6) est rectiligne ou courbe.
